# EUROPEAN PATENT APPLICATION

(11) **EP 3 913 473 A1**
(43) Date of publication of application: **24.11.2021**
(21) Application number: 20913063.2
(22) Date of filing: 11.12.2020
(51) Int. Cl.: G06F 3/0481, G06F 3/0488, G06F 3/16, G06F 9/4401, G06K 9/00

(54) **HUMAN-MACHINE INTERACTION CONTROL METHOD, APPARATUS AND SYSTEM, AND ELECTRONIC DEVICE**

(30) Priority: 25.03.2020 CN 202010220639
(71) Applicant: BEIJING BAIDU NETCOM SCIENCE TECHNOLOGY CO., LTD., No.10 Shangdi 10th Street Haidian District Beijing 100085 (CN)
(72) Inventor: WU, Zhun, Beijing 100085 (CN); WU, Shiyu, Beijing 100085 (CN); LI, Shiyan, Beijing 100085 (CN)
(74) Representative: Studio Torta S.p.A.
(86) International application number: PCT/CN2020/135719
(87) International publication number: WO 2021/189967

(57) **Abstract**

Embodiments of the present application discloses a human-computer interaction controlling method, an apparatus and a system, an electronic device, and a storage medium, and relate to the technical field of human-computer interaction. A specific implementation solution is: acquiring an environment recognition result around a human-computer interaction interface; determining, according to the environment recognition result, an operation mode of a digital human displayed on the human-computer interaction interface, where the operation mode includes at least one of the following: a self-display mode, an active interaction mode, and a wake-up interaction mode; controlling the digital human to output operation corresponding to the operation mode through the human-computer interaction interface. By determining the operation mode of the digital human according to the environment recognition result, the problem of a single interaction mode caused by simply waking up the digital human through a wake-up word in the prior art is avoided. Since different operation modes can be used to interact with the user, the diversity and flexibility of interaction modes can be realized, and the user's interaction experience can be improved.

## Description

This application claims priority to Chinese patent application No. CN202010220639.6, entitled "HUMAN-COMPUTER INTERACTION CONTROLLING METHOD, APPARATUS AND SYSTEM, AND ELECTRONIC DEVICE" and filed with the China National Intellectual Property Administration on March 25, 2020, the contents of which are incorporated herein by reference in their entireties.

### TECHNICAL FIELD

This application relates to the field of artificial intelligence technology, in particular to the field of human-computer interaction technology, and specifically to a human-computer interaction controlling method, an apparatus and a system, an electronic device, and a storage medium.

### BACKGROUND

With the development of artificial intelligence technology, new breakthroughs have also been made in the related technology of human-computer interaction.

In the prior art, human-computer interaction is mainly realized through a wake-up word. For example, one or more wake-up words are preset for a digital human, and when a voice command sent by a user includes the wake-up word, a digital human enters an interaction state with the user.

However, in the process of implementing the present application, the inventor found at least the following problems: the way to trigger the digital human to interact with the user is single and lacks flexibility.

### SUMMARY

A human-computer interaction control method, an apparatus and a system, an electronic device, and a storage medium for improving interaction flexibility.

According to a first aspect, a human-computer interaction controlling method is provided, including:
acquiring an environment recognition result around a human-computer interaction interface;
determining, according to the environment recognition result, an operation mode of a digital human displayed on the human-computer interaction interface, where the operation mode includes at least one of the following: a self-display mode, an active interaction mode, and a wake-up interaction mode; and
controlling the digital human to output operation corresponding to the operation mode through the human-computer interaction interface.

In embodiments of the present application, by determining the operation mode of the digital human according to the environment recognition result, the problem of a single interaction mode caused by simply waking up the digital human through a wake-up word in the prior art is avoided. Since different operation modes can be used to interact with the user, the diversity and interaction flexibility modes can be realized, and the user's interaction experience can be improved.

According to a second aspect, an embodiment of the present application provides a human-computer interaction controlling apparatus, including:
an acquiring module, configured to acquire an environment recognition result around a human-computer interaction interface;
a determining module, configured to determine, according to the environment recognition result, an operation mode of a digital human displayed on the human-computer interaction interface, where the operation mode includes at least one of the following: a self-display mode, an active interaction mode, and a wake-up interaction mode; and
an outputting module, configured to control the digital human to output operation corresponding to the operation mode through the human-computer interaction interface.

According to a third aspect, an embodiment of the present application provides a human-computer interaction controlling system, including: a collecting apparatus, a processing apparatus, a display apparatus and a digital human, where:
the collecting apparatus is configured to collect environment around the display apparatus to obtain environment collecting information;
the processing apparatus is configured to recognize the environment collecting information, generate an environment recognizing result, and determine, according to the environment recognizing result, an operation mode of the digital human, where the operation mode includes at least one of the following: a self-display mode, an active interaction mode, and a wake-up interaction mode; and
the processing apparatus is further configured to control the digital human to display operation corresponding to the operation mode through the display apparatus.

According to a fourth aspect, an embodiment of the present application provides an electronic device, including:
at least one processor; and
a memory communicatively connected to the at least one processor; where,
the memory stores instructions executable by the at least one processor, and the instructions are executed by the at least one processor to enable the at least one processor to execute the method according to the method described in the above embodiments.

According to a fourth aspect, an embodiment of the present application provides a non-transitory computer-readable storage medium, having computer instructions stored thereon, where the computer instructions are used to cause the computer to execute the method according to the method described in the above embodiments.

According to a sixth aspect, an embodiment of the present application provides a human-computer interaction controlling method, including:
controlling, according to a collected environment recognition result corresponding to environment around a human-computer interaction interface, the human-computer interaction interface to display an operation mode of a digital human, where the operation mode is one of the following: a self-display mode, an active interaction mode, and a wake-up interaction mode.

According to a seventh aspect, an embodiment of the present application provides a computer program comprising program codes, where when the computer runs the computer program, the program codes execute the method according to the method described in any one of the above embodiments.

According to an eighth aspect, an embodiment of the present application provides a computer program product, including a computer program, where, when the computer program is executed by a processor, the method described according to any one of the above embodiments is implemented.

The technology according to the present application solves the problems of single way of human-computer interaction and lack of flexibility, realizes the diversity and flexibility of interaction modes, and improves the user's interaction experience.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF DRAWINGS

The drawings are used to better understand the solutions, and do not constitute a limitation on the present application, where:
FIG. 1 is a schematic diagram of an application scenario of a first embodiment of the present application;
FIG. 2 is a schematic diagram of an application scenario of a second embodiment of the present application;
FIG. 3 is a schematic flowchart of a human-computer interaction controlling method of an embodiment of the present application;
FIG. 4 is a schematic flowchart of a human-computer interaction controlling method of another embodiment of the present application;
FIG. 5 is a schematic diagram of an interface of an embodiment of the present application;
FIG. 6 is a schematic diagram of an interface of another embodiment of the present application;
FIG. 7 is a schematic diagram of an interface of further another embodiment of the present application;
FIG. 8 is a schematic flowchart of a human-computer interaction controlling method of another embodiment of the present application;
FIG. 9 is a schematic flowchart of a human-computer interaction controlling method of further another embodiment of the present application;
FIG. 10 is a schematic flowchart of a human-computer interaction controlling apparatus of an embodiment of the present application;
FIG. 11 is a schematic diagram of an interactive system of an embodiment of the present application; and
FIG. 12 is a block diagram of an electronic device according to an embodiment of the present application.

### DESCRIPTION OF EMBODIMENTS

Exemplary embodiments of the present application are described below with reference to the accompanying drawings, where various details of the embodiments of the present application are included to facilitate understanding, and should be considered as merely exemplary. Therefore, those of ordinary skill in the art should recognize that various changes and modifications can be made to the embodiments described herein without departing from the scope and spirit of the present application. Similarly, for clarity and conciseness, descriptions of well-known functions and structures are omitted in the following description.

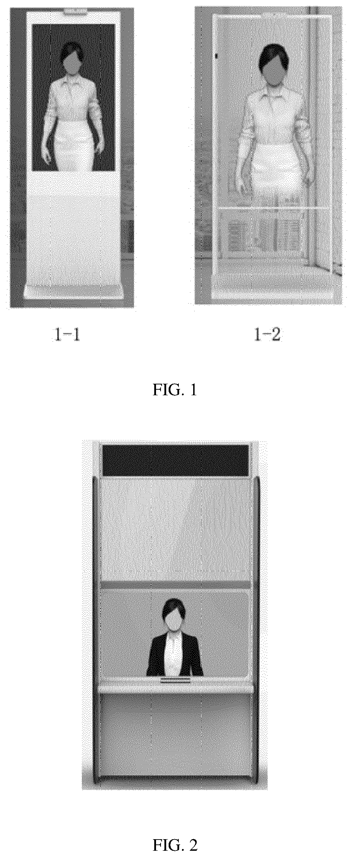

In some embodiments, a human-computer interaction controlling method of an embodiment of the present application can be applied to the application scenario shown in FIG. 1.

In the application scenario shown in FIG. 1, a human-computer interaction controlling apparatus can be a display screen including a human-computer interaction interface, which can display a digital human through the human-computer interaction interface, and the display screen can be used in a place, such as a shopping mall, a bank and a hospital, and a height of the human-computer interaction controlling apparatus can be set based on a height of the user.

It is worth noting that, in some embodiments, the display screen may be a light emitting diode (LED) display screen, as shown with 1-1 in FIG. 1.

Of course, in other embodiments, the display screen may be an organic light emitting diode (OLED) display screen, as shown with 1-2 in FIG. 1.

In some other embodiments, the human-computer interaction controlling method of the embodiment of the present application can further be applied to the application scenario shown in FIG. 2.

In the application scenario shown in FIG. 2, the human-computer interaction controlling apparatus may be a display screen including a human-computer interaction interface, which can display a digital human through the human-computer interaction interface, and the display screen is particularly adapted to a scenario of counter business, such as a counter for member registration in a shopping mall and a business counter in a bank, etc., and a height of the human-computer interaction controlling apparatus can be set based on a height of the user when standing, or can be set based on a height of a seat in front of the counter.

In the related art, human-computer interaction is mainly realized through a wake-up word. For example, one or more wake-up words are preset for a digital human, and when a voice command sent by a user includes the wake-up word, a digital human enters an interaction state with the user.

Since only after the digital human receives the wake-up word sent by the user, the digital human will enter the interactive state and interact with the user, which may cause a single way of human-computer interaction and lack of flexibility.

In order to solve the above problems, the inventor of the present application obtains the inventive concept of the present application after creative working: setting multiple operation modes of the digital human, and controlling, according to recognition result of recognizing the surrounding environment, the digital human to execute an operation mode corresponding to the recognition result.

In the present application, because there are multiple operation modes, and the operation mode corresponding to the recognition result can be selected based on different recognition results, that is, the operation mode can be selected flexibly, and do not need to rely on the wake-up word. Therefore, the diversity and interaction flexibility can be realized, and the user's interactive experience can be improved.

The technical solutions of the present application and how the technical solutions of the present application solve the above technical problems will be described in detail below with specific embodiments. The following specific embodiments can be combined with each other, and the same or similar concepts or processes may not be repeated in some embodiments. The embodiments of the present application will be described below in conjunction with the drawings.

According to an aspect of an embodiment of the present application, an embodiment of the present application provides a human-computer interaction controlling method.

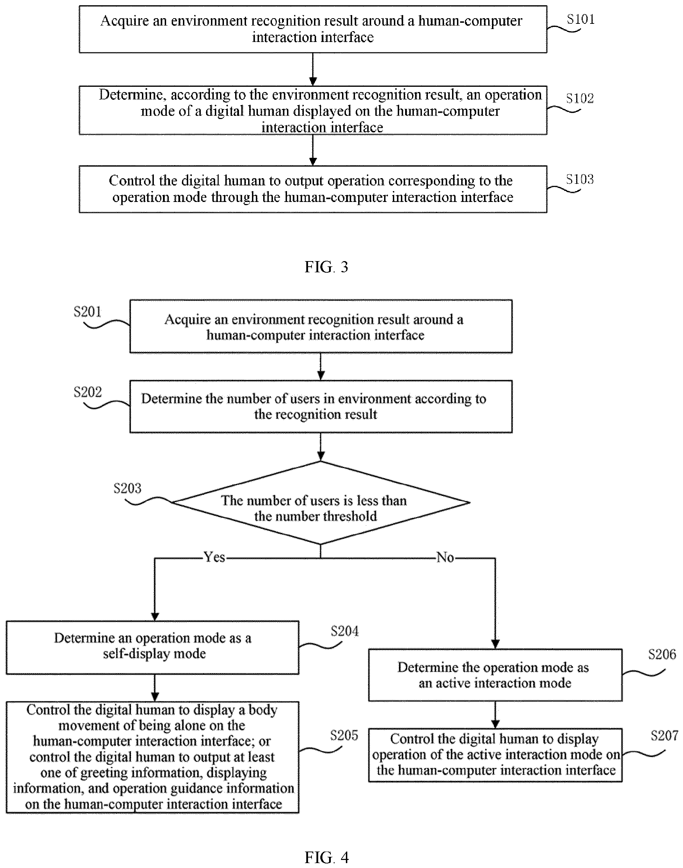

Please refer to FIG. 3, which is a schematic flowchart of a human-computer interaction controlling method of an embodiment of the present application;
As shown in FIG. 3, the method includes:
S101: acquire an environment recognition result around a human-computer interaction interface.

An execution subject of the embodiment of the present application may be a human-computer interaction controlling apparatus, and the human-computer interaction controlling apparatus may specifically be a server, a computer, a processor, and the like.

For example, when the method of the embodiment of the present application is applied to the application scenarios shown in FIG. 1 and FIG. 2, the execution subject of the embodiment of the present application may be a processor provided in the display screen; or, it may be a computer a server communicatively connected to the display screen.

The environment recognition result is used to represent an obtained recognition result by identifying people and objects in the surrounding environment of the human-computer interaction interface. The environment recognition result may include user information in the environment (such as image information and/or audio information of the user, etc.), the environment recognition result may also include object information (such as a product, a plant and an animal, etc.), and the specific identifying method can refer to related technologies, which will not be repeated here.

Specifically, the surrounding environment can be based on a preset distance. For example, the environment recognition result is used to represent the obtained result by recognizing the environment with a distance of 2 meters from the human-computer interaction interface.

For example, if the display screen shown in FIG. 1 is set in a shopping mall, the environment recognition result is used to represent the recognition result of the environment within 2 meters around the display screen.

For another example, if the display screen shown in FIG. 1 is set in a bank, the environment recognition result is used to represent the recognition result of the environment within 2 meters around the display screen.

For another example, if the display screen shown in FIG. 1 is set in a hospital, the environment recognition result is used to represent the recognition result of the environment within 2 meters around the display screen.

The human-computer interaction interface, also known as a user interface or an interface for people who use, is used to represent the medium for interaction and information exchange between the machine and the user.

For example, in the application scenarios shown in FIGs. 1 and 2, the human-computer interaction interface is the display interface of the display screen, and the user can communicate and discuss with the display screen by voice or a touch screen. In the embodiment of the present application, communication and discussion mainly refer to that the user can communicate and discuss with the digital human displayed on the human-computer interaction interface.

S 102: determine, according to the environment recognition result, an operation mode of a digital human displayed on the human-computer interaction interface, where the operation mode includes at least one of the following: a self-display mode, an active interaction mode, and a wake-up interaction mode.

The operation mode can be determined according to the environment recognition result when the human-computer interaction controlling apparatus is started; or it can be that after the human-computer interaction controlling apparatus is started, the environment around the human-computer interaction interface is still recognized, and when the environment recognition result does not change, the operation mode corresponding to the environment recognition result is continued to be maintained, while, when the environment recognition result changes, the operation mode is determined and adjusted according to the changed environment recognition result.

In other words, the operation mode can change with the change of the environment recognition result. That is, the operation modes can be switched mutually, such as switching from the self-display mode to the active interaction mode, or from the active interaction mode to the wake-up interaction mode, and so on.

The self-display mode is used to represent the mode in which the digital human spontaneously displays certain movements or expressions, or spontaneously expresses certain information.

The active interaction mode is used to represent the mode in which the digital human actively interact with the user.

The wake-up interaction mode is used to represent the mode in which when awakened by the user, the digital human interact with the user.

That is to say, in the embodiment of the present application, the operation mode corresponding to the environment recognition result can be determined among multiple operation modes according to the environment recognition result, to determine the operation mode of the digital human, thereby avoiding the problem of a single way of interaction mode caused by simply waking up the digital human through a wake-up word in the prior art. Since it can be selected from various operation modes, the diversity and flexibility of human-computer interaction can be realized, and the user's interaction experience can be improved.

S103: control the digital human to output operation corresponding to the operation mode through the human-computer interaction interface.

For example, if the operation mode is the self-display mode, the operation corresponding to the self-display mode performed by the digital human will be output on the human-computer interaction interface; if the operation mode is the active interaction mode, then the operation corresponding to the active interaction mode performed by the digital human will be output on the human-computer interaction interface; and if the operation mode is the wake-up interaction mode, then the operation corresponding to the wake-up interaction mode performed by the digital human will be output on the human-computer interaction interface.

In the embodiment of the present application, the operation corresponding to the operation mode performed by the digital human is displayed through the human-computer interaction interface, which can enhance the user's intuitive experience, thereby improving the activity of human-computer interaction, and thus improving the effectiveness of human-computer interaction.

Based on the above analysis, the embodiment of the present application provides a human-computer interaction controlling method, and the method includes: acquiring an environment recognition result around a human-computer interaction interface; determining, according to the environment recognition result, an operation mode of a digital human displayed on the human-computer interaction interface, where the operation mode includes at least one of the following: a self-display mode, an active interaction mode, and a wake-up interaction mode; controlling the digital human to output operation corresponding to the operation mode through the human-computer interaction interface. In the embodiment of the present application, by determining the operation mode of the digital human according to the environment recognition result, the problem of a single interaction mode caused by simply waking up the digital human through a wake-up word in the prior art is avoided. Since different operation modes can be used to interact with the user, the diversity and flexibility of interaction modes can be realized, and the user's interaction experience can be improved.

In order to enable readers to understand the relationship between the environment recognition result and the operation mode more clearly, the embodiment of the present application will now be described in detail with reference to FIG. 4. FIG. 4 is a schematic flowchart of a human-computer interaction controlling method of another embodiment of the present application.

As shown in FIG. 4, the method includes:
S201: acquire an environment recognition result around a human-computer interaction interface.

The description of S201 can be referred to S101, which will not be repeated here.

S202: determine the number of users in environment according to the recognition result.

Based on the above example, it can be known that the environment recognition result includes user information, therefore, based on the environment recognition result, the number of users in the environment can be determined.

S203: determine a magnitude relationship between the number of users and a number threshold, and if the number of users is less than the number threshold, execute S204 to S205; if the number of users is greater than or equal to the number threshold, execute S206 to S207.

The number threshold can be set based on demand, experience and experimentation.

S204: determine an operation mode as a self-display mode.

That is to say, when the number of users is relatively small, the operation mode of the digital human can be determined as the self-display mode.

S205: control the digital human to display a body movement of being alone on the human-computer interaction interface; or control the digital human to output at least one of greeting information, displaying information, and operation guidance information on the human-computer interaction interface.

That is to say, the self-display mode can be manifested from at least two aspects. One aspect is the manifestation in terms of body movements, that is, the digital human display a body movement of being alone on the human-computer interaction interface; the other aspect is that the digital human outputs at least one of greeting information, displaying information, and operation guidance information on the human-computer interaction interface.

Specifically, the description about the manifestation of body movements is as follows.

The body movements include, but are not limited to, looking around, thinking, showing cuteness, pacing, being in a daze, yawning, nap, and stretching.

In some embodiments, the digital human can be controlled to sequentially display the above-mentioned body movements on the human-computer interaction interface at a preset time interval, such as switching a body movement every 0.1 seconds, and the duration of each body movement can be set to be different, based on the different body movements.

For example, after looking around for 5 seconds, the digital human performs the movement of thinking at 0.1 second interval, and after performing the movement of thinking for 5 seconds, the digital human perform the movement of showing cuteness at 0.1 second interval.

For example, if the display screen is set in a shopping mall and the number of users identified in the environment is small, the operation mode of the digital human can be determined as the self-display mode, and the digital human can be controlled to display the above movements on the human-computer interaction interface.

It is understandable that, after seeing the above movements, at least part of users will walk into the environment and interact with the digital human.

In other words, when the number of users is small, the digital human is controlled to display a body movement of being alone on the human-computer interaction interface, which can attract more user's attention, so as to attract more users into the environment, thereby improving the possibility of human-computer interaction.

Specifically, the description of greeting information, displaying information, and operation guidance information is as follows.

The greeting information is used to represent the relevant information for greeting the user.

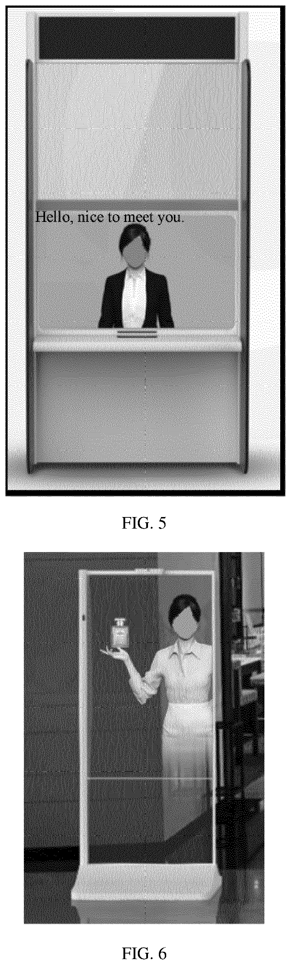

Specifically, please refer to FIG. 5, which is a schematic diagram of the interface corresponding to the greeting message.

The display information is used to represent the information of displaying information of the digital human, product information, and notification information.

For example, the information of the digital human includes information related to self-introduction of the digital human; the product information may include information related to the quality and performance of the product, information about the price of the product, and information related to the usage method of the product, etc.; the notification information may include information about the latest development related to the product.

Specifically, please refer to FIG. 6, which is a schematic diagram of the interface corresponding to displaying related product information.

The operation guidance information is used to represent the information for guiding the user to perform operation on the human-computer interaction interface or performing operation on the product on the human-computer interaction interface. In addition, the information for performing operation on the product on the human-computer interaction interface includes related information for guiding the user to understand and purchase the product, and related information for guiding the user to understand and purchase a wealth management product of a bank.

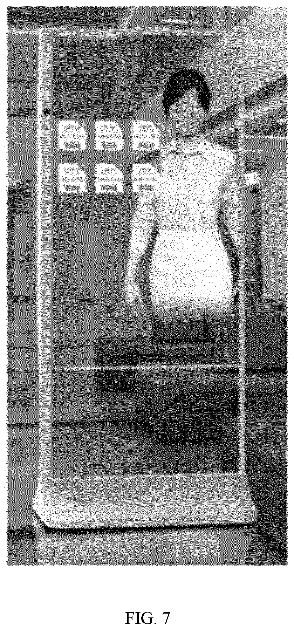

Specifically, please refer to FIG. 7, which is a schematic diagram of the interface corresponding to related information of operating the product.

Similarly, when the number of users is small, the digital human is controlled to output at least one of greeting information, displaying information, and operation guidance information, which can attract more user's attention, so as to attract more users into the environment, thereby improving the possibility of human-computer interaction.

In some embodiments, on the basis that the self-display mode can be manifested based on the above two aspects, the display of the digital human on the human-computer interaction interface is further refined.

For example, the two aspects are distinguished according to the number of users, that is, within the range of the number threshold, the number of users is further divided into intervals. If the number of users is in a first interval, the digital human is controlled to display a body movement of being alone on the human-computer interaction interface; if the number of users is in a second interval, the digital human is controlled to output at least one of greeting information, displaying information, and operation guidance information on the human-computer interaction interface.

Any quantity in the first interval is less than any quantity in the second interval, and the maximum value of the second interval is the number threshold.

S206: determine the operation mode as an active interaction mode.

S207: control the digital human to display operation of the active interaction mode on the human-computer interaction interface.

Based on the above example, it can be seen that the active interaction mode can be that the digital human actively interacts with the user. Therefore, the operation of the active interaction mode can be implemented as the greeting information of the digital human actively greeting the user, or the introduction information of the digital human actively introducing a product, or the digital human actively asking the user's needs, so as to provide service information of a corresponding service based on user's needs, and so on.

That is to say, in the embodiment of the present application, when there are a certain number of users in the environment, the digital human can be controlled to display the above-mentioned operations corresponding to the active interaction mode on the human-computer interaction interface, so as to realize the improvement on interaction flexibility through active interaction, and the user's attention can be attracted through active interaction, thereby increasing the possibility of interacting with users.

It is worth noting that, in some embodiments, after S203 is executed, it is possible to determine a duration during which the number of users is less than the number threshold, and when the duration during which the number of users is less than the number threshold exceeds a setting time, execute S204; or, execute determination of a duration during which the number of users is greater than or equal to the number threshold, and when the time duration during which the number of users is greater than or equal to the number threshold exceeds a setting time, execute S206.

It is understandable that the frequency of changes in the number of users may be relatively high. If the number of users at the current moment is relatively large, which is greater than the number threshold, while the number of users at a previous moment is relatively small, which is less than the number threshold, and the number of users at a previous moment of the previous moment is relatively large, which is greater than the number threshold, it is necessary to switch the operation mode twice in a short time.

In the embodiment of the present application, the startup or switching of the operation mode is controlled by setting the time, which can avoid frequent switching of the operation mode, thereby achieving the technical effect of saving processing resources.

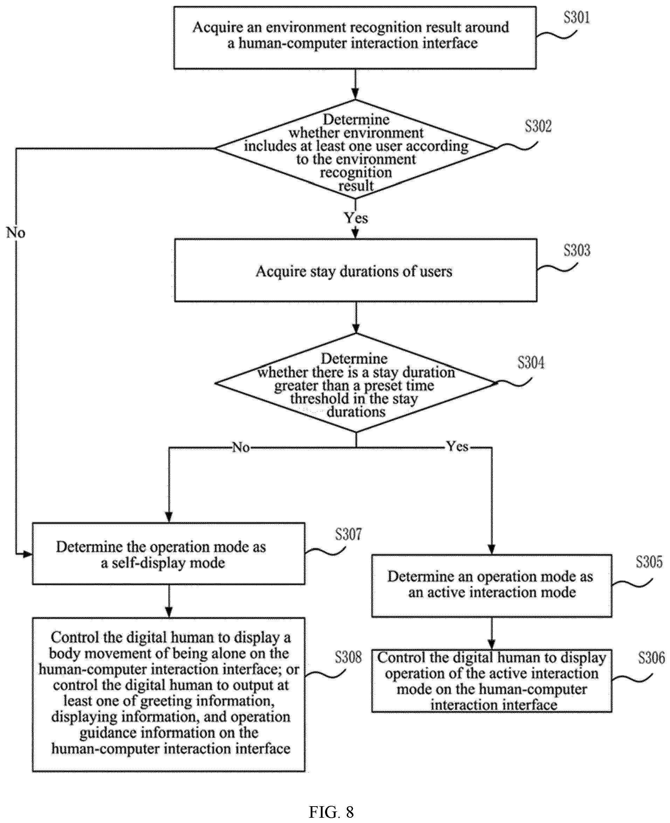

In order to enable readers to understand the relationship between the environment recognition result and the operation mode more clearly, the embodiment of the present application will now be described in detail with reference to FIG. 8. FIG. 8 is a schematic flowchart of a human-computer interaction controlling method of another embodiment of the present application.

As shown in FIG. 8, the method includes:
S301: acquire an environment recognition result around a human-computer interaction interface.

The description of S301 can be referred to S101, which will not be repeated here.

S302: determine whether environment includes at least one user according to the environment recognition result, if yes, execute S303, and if not, execute S307 to S308.

S303: acquire stay durations of users.

The stay duration can be used to represent a duration during which the user stays in the environment, and the stay duration can also be used to represent a duration during which the user's eyes stay on the human-computer interaction interface.

S304: determine whether there is a stay duration greater than a preset time threshold in the stay durations, if yes, execute S305, if not, execute S307 to S308.

S305: determine an operation mode as an active interaction mode.

In the embodiment of the present application, if one or more stay duration are greater than the time threshold, it means that there may be a user (the user corresponding to the stay duration greater than the time threshold) is paying attention to the display screen, and then the operation mode of the digital human is determined to be the active interaction mode, so as to control the digital human to actively interact with the user, thereby realizing the interaction flexibility and enhancing the user's interaction experience.

S306: control the digital human to display operation of the active interaction mode on the human-computer interaction interface.

The description of S306 can be referred to S207, which will not be repeated here.

S307: determine the operation mode as a self-display mode.

S308: control the digital human to display a body movement of being alone on the human-computer interaction interface; or control the digital human to output at least one of greeting information, displaying information, and operation guidance information on the human-computer interaction interface.

The description of S307 to S308 can be referred to S101 to S205, which will not be repeated here.

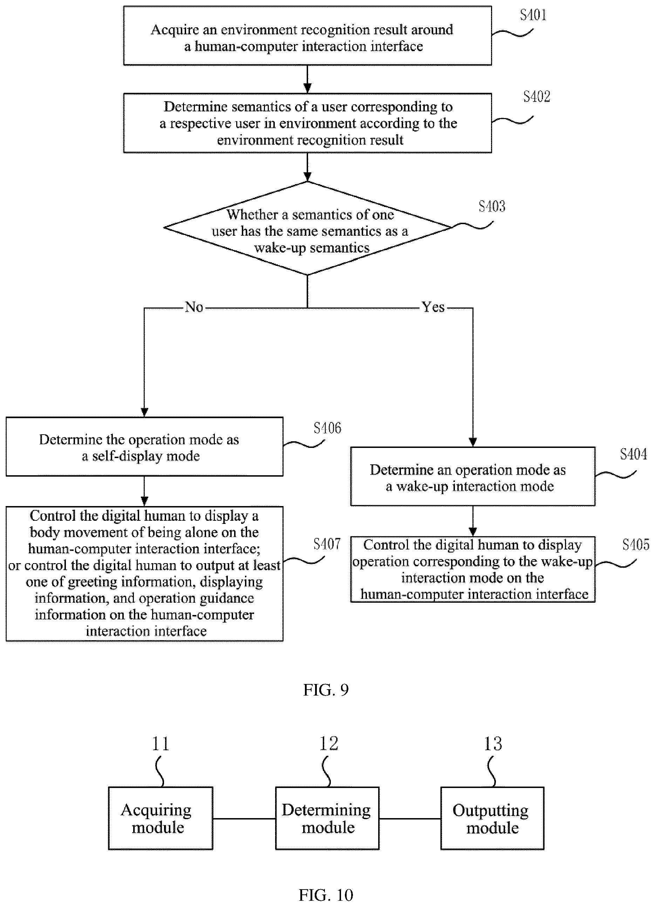

In order to enable readers to understand the relationship between the environment recognition result and the operation mode more clearly, the embodiment of the present application will now be described in detail with reference to FIG. 9. FIG. 9 is a schematic flowchart of a human-computer interaction controlling method of further another embodiment of the present application.

As shown in FIG. 9, the method includes:
S401: acquire an environment recognition result around a human-computer interaction interface.

The description of S401 can be referred to S101, which will not be repeated here.

S402: determine semantics of a user corresponding to a respective user in environment according to the environment recognition result.

The semantics is used to represent audio information or movement information initiated by the user.

S403: determine whether a semantics of one user among the semantics of the users has the same semantics as a wake-up semantics, if yes, execute S404 to S405, if not, execute S406 to S407, or execute S408 to S412 (not shown in the figure).

The wake-up semantics is used to represent the audio information or the movement information for awakening the digital human so that the digital human can interact with the user.

S404: determine an operation mode as a wake-up interaction mode.

S405: control the digital human to display operation corresponding to the wake-up interaction mode on the human-computer interaction interface.

Specifically, the digital human responds according to the user's interaction content.

For example, the user consults performance of a certain product, and the digital human introduces the product to the user in detail.

S406: determine the operation mode is determined as a self-display mode.

S407: control the digital human to display a body movement of being alone on the human-computer interaction interface; or control the digital human to output at least one of greeting information, displaying information, and operation guidance information on the human-computer interaction interface.

The description of S406 to S407 can be referred to S204 to S205, which will not be repeated here.

S408: determine whether the environment includes at least one user according to the environment recognition result, if yes, execute S409, and if not, execute S406 to S407.

S409: acquire a stay duration of each users.

S410: determine whether there is a stay duration greater than a preset time threshold in each stay duration, if yes, execute S411, if not, execute S406 to S407.

S411: determine the operation mode as an active interaction mode.

S412: control the digital human to display the operation of the active interaction mode on the human-computer interaction interface.

The description of S408 to S412 can be referred to S302 to S308, which will not be repeated here.

According to another aspect of an embodiment of the present application, an embodiment of the present application further provides a human-computer interaction controlling apparatus, configured to execute the human-computer interaction controlling method described in the foregoing embodiments.

Please refer to FIG. 10, which is a schematic flowchart of a human-computer interaction controlling apparatus of an embodiment of the present application.

As shown in FIG. 10, the apparatus includes:
an acquiring module 11, configured to acquire an environment recognition result around a human-computer interaction interface;
a determining module 12, configured to determine, according to the environment recognition result, an operation mode of a digital human displayed on the human-computer interaction interface, where the operation mode includes at least one of the following: a self-display mode, an active interaction mode, and a wake-up interaction mode; and
an outputting module 13, configured to control the digital human to output operation corresponding to the operation mode through the human-computer interaction interface.

In some embodiments, if the environment recognition result is that a number of users in environment is less than a preset number threshold, the determined operation mode is the self-display mode.

In some embodiments, the determining module 12 is configured to determine that the number of the users is less than the preset number threshold for more than a setting time.

In some embodiments, if the operation mode is the self-display mode, the outputting module 13 is configured to control the digital human to display a body movement of being alone on the human-computer interaction interface.

In some embodiments, if the operation mode is the self-display mode, the outputting module 13 is configured to control the digital human to output at least one of greeting information, displaying information, and operation guidance information on the human-computer interaction interface.

In some embodiments, if the environment recognition result is that a number of users in environment is greater than or equal to a preset number threshold, the determined operation mode is the active interaction mode.

In some embodiments, if the environment recognition result is that a stay duration of at least one user in environment is greater than a preset time threshold, the determined operation mode is the active interactive mode.

In some embodiments, if the environment recognition result is that semantics of at least one user in environment acquired by analysis matches preset wake-up semantics, the determined operation mode is the wake-up interaction mode.

According to another aspect of an embodiment of the present application, an embodiment of the present application further provides an interaction system.

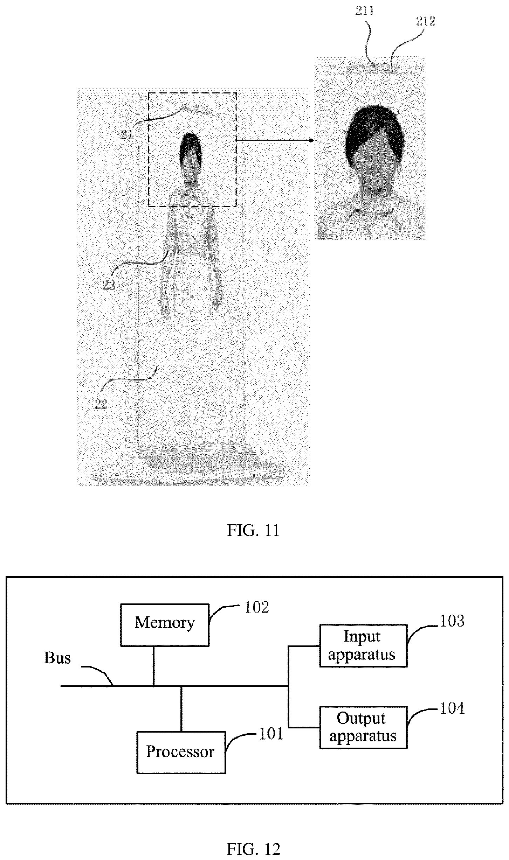

Please refer to FIG. 11, which is a schematic diagram of an interactive system of an embodiment of the present application.

As shown in FIG. 11, the system includes: a collecting apparatus 21, a processing apparatus (not shown in the figure), a display apparatus 22 and a digital human 23, where:
the collecting apparatus 21 is configured to collect environment around the display apparatus to obtain environment collecting information.

As shown in FIG. 11, the collecting apparatus 21 includes a camera 211 and a microphone 212.

It is worth noting that the positions and numbers of the camera 211 and the microphone 212 are not limited by FIG. 11.

For example, in some embodiments, the setting position of the camera 211 can be set in the center as shown in FIG. 11, or the camera 211 can be set in other positions, such as setting the camera 211 in the upper left corner or the upper right corner of the display apparatus 22, etc.; and the number of the cameras 211 may be one as shown in FIG. 11, or may be more than one.

In other embodiments, the setting position of the microphone 212 can be set in the center as shown in FIG. 11, or the microphone 212 can be set in other positions, such as setting the microphone 211 in the upper left corner or the upper right corner of the display apparatus 22, etc.; and the number of the microphone 212 may be four as shown in FIG. 11, or may be one or two, etc.

The environment collecting information includes image information and/or audio information, such as an image and/or voice of the user in the environment.

The processing apparatus is configured to recognize the environment collecting information, generate an environment recognizing result, and determine, according to the environment recognizing result, an operation mode of the digital human 23, where the operation mode includes at least one of the following: a self-display mode, an active interaction mode, and a wake-up interaction mode.

The processing apparatus is further configured to control the digital human 23 to display operation corresponding to the operation mode through the display apparatus 22.

For the introduction of various operation modes, please refer to the above examples, which will not be repeated here.

According to the embodiment of the present application, the present application also provides an electronic device and a readable storage medium.

Please refer to FIG. 12, which is a block diagram of an electronic device according to an embodiment of the present application.

The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile devices, such as a personal digital processing, a cellular phone, a smart phone, a wearable device, and other similar computing devices. The components shown herein, their connections and relationships, and their functions are merely examples, and are not intended to limit implementations of the present application described and/or claimed herein.

As shown in FIG. 12, the electronic device includes: one or more processors 101, a memory 102, and interfaces for connecting various components, including high-speed interfaces and low-speed interfaces. The various components are connected to each other by different buses, and can be installed on a common main board or mounted in other ways as required. The processor may process instructions executed within the electronic device, including instructions stored in or on the memory to display GUI graphical information on an external input/output apparatus (such as a display device coupled to an interface). In other implementations, multiple processors and/or multiple buses may be used with multiple memories and multiple memories, if needed. Similarly, multiple electronic devices can be connected, and each device provides some necessary operations (for example, as a server array, a group of blade servers, or a multiprocessor system). One processor 101 is taken as an example in FIG. 12.

The memory 102 is the non-transitory computer readable storage medium provided in the embodiments of the present application. The memory stores instructions executable by at least one processor to cause the at least one processor to execute the vehicle positioning method provided by the embodiments of the present application. The non-transitory computer readable storage medium of the embodiments of the present application stores computer instructions for causing a computer to execute the vehicle positioning method provided by the embodiments of the present application.

As a non-transitory computer readable storage medium, the memory 102 can be used for storing non-transitory software programs, non-transitory computer executable programs and modules, such as program instructions/modules in the embodiments of the present application. The processor 101 executes various functional applications and data processing of a server by running non-transitory software programs, instructions and modules stored in the memory 102, that is, realizing the vehicle positioning method in the method embodiments described above.

The memory 102 can include a program storing area and a data storing area, where the program storing area may store an operating system, an application program required by at least one function; the data storing area can store data created according to the use of the electronic device, etc. In addition, the memory 102 can include a high-speed random access memory, and may further include a non-transitory memory, such as at least one disk memory device, a flash memory device, or other non-transitory solid-state memory devices. In some embodiments, the memory 102 may optionally include memories remotely located with respect to the processor 101, and these remote memories may be connected to the electronic device through a network. Examples of the network described above includes but are not limited to, the Internet, an intranet, a local area network, a block-chain-based service network (BSN), a mobile communication network and combinations thereof.

The electronic device can further include: an input apparatus 103 and an output apparatus 104. The processor 101, the memory 102, the input apparatus 103, and the output apparatus 104 may be connected by a bus or other means. A connection by a bus is taken as an example in FIG. 12.

The input apparatus 103 can receive inputted digital or character information, and generate a key signal input related to user setting and function control of the electronic device, such as a touch screen, a keypad, a mouse, a track pad, a touch pad, an indicator stick, one or more mouse buttons, a trackball, a joystick and other input apparatuses. The output apparatus 104 may include a display device, an auxiliary lighting apparatus (e.g., an LED), a tactile feedback device (e.g., a vibration motor), etc. The display device may include, but is not limited to, a liquid crystal display (LCD), a light emitting diode (LED) display, and a plasma display. In some implementations, the display device may be a touch screen.

The various embodiments of the systems and techniques described herein may be implemented in digital electronic circuit systems, integrated circuit systems, dedicated ASIC (application specific integrated circuits), computer hardware, firmware, software, and/or combinations thereof. These various implementations may include: being implemented in one or more computer programs that can be executed and/or interpreted on a programmable system including at least one programmable processor. The programmable processor may be a special or general programmable processor, and can receive data and instructions from a storage system, at least one input apparatus and at least one output apparatus, and transmit data and instructions to the storage system, the at least one input apparatus and the at least one output apparatus.

These computing programs (also called programs, software, software applications, or codes) include machine instructions of programmable processors, and can be implemented using high-level procedures and/or object-oriented programming languages, and/or assembly/machine languages. As used herein, the terms "machine-readable medium" and "computer-readable medium" refer to any computer program product, device, and/or apparatus (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" refers to any signal used for providing machine instructions and/or data to a programmable processor.

To provide interaction with users, the systems and techniques described herein can be implemented on a computer which has: a display device (e.g., a CRT (cathode ray tube) or LCD (liquid crystal display) monitor) for displaying information to users; as well as a keyboard and a pointing apparatus (e.g., a mouse or a trackball) through which users can provide inputs to the computer. Other kinds of apparatuses can also be used to provide interaction with users, for example, a feedback provided to a user can be any form of sensory feedback (e.g., visual feedback, auditory feedback, or tactile feedback); and can receive inputs from users in any form (including acoustic input, voice input or tactile input).

The systems and techniques described herein can be implemented in a computing system including background components (e.g., as a data server), or a computing system including middleware components (e.g., an application server), or a computing system including front-end components (e.g., a user computer with a graphical user interface or a web browser through which users can interact with implementations of the systems and techniques described herein), or a computing system including any combination of such background components, middleware components or front-end components. Components of the system can be connected to each other through digital data communication in any form or medium (e.g., a communication network). Examples of the communication network include: a local area networks (LAN), a block-chain-based service network (BSN), a wide area network (WAN) and the Internet.

A computer system may include a client and a server. The client and server are generally remote from each other and usually interact through a communication network. A relationship between the client and the server is generated by computer programs running on corresponding computers and having a client-server relationship with each other.

According to another aspect of an embodiment of the present application, an embodiment of the present application further provides a human-computer interaction controlling method, including:
controlling, according to a collected environment recognition result corresponding to environment around a human-computer interaction interface, the human-computer interaction interface to display an operation mode of a digital human, where the operation mode is one of the following: a self-display mode, an active interaction mode, and a wake-up interaction mode.

That is to say, in embodiments of the present application, the digital human can be controlled to display the corresponding operation mode in the human-computer interaction interface according to the environment recognition result, that is, the digital human can display different operation modes according to the different environment recognition results, so as to realize the diversity and flexibility of human-computer interaction, and improve the user's interaction experience.

According to another aspect of an embodiment of the present application, the embodiment of the present application further provides a computer program including program codes, where when the computer runs the computer program, the program codes execute the method according to the method described in any one of the above embodiments.

According to another aspect of an embodiment of the present application, the embodiment of the present application provides a computer program product, including a computer program, where, when the computer program is executed by a processor, the method described according to any one of the above embodiments is implemented.

It should be understood that steps can be reordered, added or deleted for the various forms of processes shown above. For example, the steps described in the present application can be executed in parallel, sequentially or in a different order, so long as the desired result of the technical solution disclosed in the present application can be achieved, which is not limited herein.

The above specific implementations do not constitute a limitation to the protection scope of the present application. It should be understood by those skilled in the art that various modifications, combinations, sub-combinations, and substitutions may be performed according to design requirements and other factors. Any modification, equivalent substitution, improvement and others that are made within the spirit and principle of the present application shall be included in the protection scope of the present application.

## Claims

1. A human-computer interaction controlling method, comprising:
acquiring an environment recognition result around a human-computer interaction interface;
determining, according to the environment recognition result, an operation mode of a digital human displayed on the human-computer interaction interface, wherein the operation mode comprises at least one of the following: a self-display mode, an active interaction mode, and a wake-up interaction mode; and
controlling the digital human to output operation corresponding to the operation mode through the human-computer interaction interface.

2. The method according to claim 1, wherein if the environment recognition result is that a number of users in environment is less than a preset number threshold, the determined operation mode is the self-display mode.

3. The method according to claim 2, wherein before the determining an operation mode of a digital human displayed on the human-computer interaction interface, the method further comprises:
the number of the users is less than the preset number threshold for more than a setting time.

4. The method according to claim 2 or 3, wherein if the operation mode is the self-display mode, the controlling the digital human to output operation corresponding to the operation mode through the human-computer interaction interface, comprises:
controlling the digital human to display a body movement of being alone on the human-computer interaction interface.

5. The method according to any one of claims 2 to 4, wherein if the operation mode is the self-display mode, the controlling the digital human to output operation corresponding to the operation mode through the human-computer interaction interface, comprises:
controlling the digital human to output at least one of greeting information, displaying information, and operation guidance information on the human-computer interaction interface.

6. The method according to any one of claims 1-5, wherein if the environment recognition result is that a number of users in environment is greater than or equal to a preset number threshold, the determined operation mode is the active interaction mode.

7. The method according to any one of claims 1-6, wherein if the environment recognition result is that a stay duration of at least one user in environment is greater than a preset time threshold, the determined operation mode is the active interactive mode.

8. The method according to any one of claims 1-7, wherein if the environment recognition result is that semantics of at least one user in environment acquired by analysis matches preset wake-up semantics, the determined operation mode is the wake-up interaction mode.

9. A human-computer interaction controlling apparatus, comprising:
an acquiring module, configured to acquire an environment recognition result around a human-computer interaction interface;
a determining module, configured to determine, according to the environment recognition result, an operation mode of a digital human displayed on the human-computer interaction interface, wherein the operation mode comprises at least one of the following: a self-display mode, an active interaction mode, and a wake-up interaction mode; and
an outputting module, configured to control the digital human to output operation corresponding to the operation mode through the human-computer interaction interface.

10. The apparatus according to claim 9, wherein if the environment recognition result is that a number of users in environment is less than a preset number threshold, the determined operation mode is the self-display mode.

11. The apparatus according to claim 10, wherein the determining module is configured to determine that the number of the users is less than the preset number threshold for more than a setting time.

12. The apparatus according to claim 10 or 11, wherein if the operation mode is the self-display mode, the outputting module is configured to control the digital human to display a body movement of being alone on the human-computer interaction interface.

13. The apparatus according to any one of claims 10 to 12, wherein if the operation mode is the self-display mode, the outputting module is configured to control the digital human to output at least one of greeting information, displaying information, and operation guidance information on the human-computer interaction interface.

14. The apparatus according to any one of claims 9-13, wherein if the environment recognition result is that a number of users in environment is greater than or equal to a preset number threshold, the determined operation mode is the active interaction mode.

15. The apparatus according to any one of claims 9-14, wherein if the environment recognition result is that a stay duration of at least one user in environment is greater than a preset time threshold, the determined operation mode is the active interactive mode.

16. The apparatus according to any one of claims 9-15, wherein if the environment recognition result is that semantics of at least one user in environment acquired by analysis matches preset wake-up semantics, the determined operation mode is the wake-up interaction mode.

17. A human-computer interaction controlling system, comprising: a collecting apparatus, a processing apparatus, a display apparatus and a digital human, wherein:
the collecting apparatus is configured to collect environment around the display apparatus to obtain environment collecting information;
the processing apparatus is configured to recognize the environment collecting information, generate an environment recognizing result, and determine, according to the environment recognizing result, an operation mode of the digital human, wherein the operation mode comprises at least one of the following: a self-display mode, an active interaction mode, and a wake-up interaction mode; and
the processing apparatus is further configured to control the digital human to display operation corresponding to the operation mode through the display apparatus.

18. An electronic device, comprising:
at least one processor; and
a memory communicatively connected to the at least one processor; wherein,
the memory stores instructions executable by the at least one processor, and the instructions are executed by the at least one processor to enable the at least one processor to execute the method according to any one of claims 1-8.

19. A non-transitory computer-readable storage medium, having computer instructions stored thereon, wherein the computer instructions are used to cause the computer to execute the method according to any one of claims 1-8.

20. A human-computer interaction controlling method, comprising:
controlling, according to a collected environment recognition result corresponding to environment around a human-computer interaction interface, the human-computer interaction interface to display an operation mode of a digital human, wherein the operation mode is one of the following: a self-display mode, an active interaction mode, and a wake-up interaction mode.

21. A computer program comprising program codes, wherein when the computer runs the computer program, the program codes execute the method according to any one of claims 1-8.

22. A computer program product, comprising a computer program, wherein, when the computer program is executed by a processor, the method according to any one of claims 1-8 is implemented.
